Europäisches Patentamt

European Patent Office

Office européen des brevets

(19)

(11) Veröffentlichungsnummer: **0 181 835**
A2

## (12) EUROPÄISCHE PATENTANMELDUNG

(21) Anmeldenummer: 85810497.9

(22) Anmeldetag: 30.10.85

(51) Int. Cl.⁴: **G 11 B 23/03**

(30) Priorität: 30.10.84 CH 5170/84

(43) Veröffentlichungstag der Anmeldung:
21.05.86 Patentblatt 86/21

(84) Benannte Vertragsstaaten:
AT BE DE FR GB IT LU NL SE

(71) Anmelder: H. & G. Meister AG
Eugen-Huberstrasse 4
CH-8048 Zürich(CH)

(72) Erfinder: Latscha, Serge
c/o Firma Jost AG Im Schörli 3
CH-8600 Dübendorf(CH)

(74) Vertreter: Feldmann, Clarence Paul et al,
c/o Patentanwaltsbüro FELDMANN AG Postfach
Kanalstrasse 17
CH-8152 Glattbrugg(CH)

(54) **Aufbewahrungsbehältnis für Disketten.**

(57) Das Behältnis (1) dient zur Aufbewahrung von Disketten für Compact-Disk-Abspielgeräte. Es hat eine rechteckige Grundform und einen in einem Eckbereich scharnierend angeordneten Deckel (2) der eine Schmalseite abdeckt. Der Deckel ist integral mit einem, im wesentlichen U-förmigen, in geschlossenem Zustand in das Behältnis hineinragenden Diskettenhalter (20-22) verbunden. Zwecks Entnahme oder Einsetzen einer Diskette (D) ist der Diskettenhalter durch Oeffnen des Deckels aus dem Behältnis herausschwenkbar.

Das Oeffnen und Schliessen sowie die Entnahme oder das Einsetzen einer Diskette lässt sich mit einer Hand bewerkstelligen. Das Behältnis ist dadurch besonders geeignet für eine Verwendung in einem Auto.

EP 0 181 835 A2

Fig.1

PATENTANSPRUECHE

1. Flaches, rechteckiges Aufbewahrungsbehältnis für Disketten für Compact-Disc-Abspielgeräte, dadurch gekennzeichnet, dass es einen, in einem Eckbereich scharnierend angeordneten Deckel (2) aufweist, der eine Abdeckung einer Schmalseite des Behältnisses (1) bildet und an seiner Unterseite mit einem flachen, im wesentlichen U-förmigen, in geschlossenem Zustand in das Behältnis hineinragenden Diskettenhalter (20,21) versehen ist, der eine Führungsnut (22) für eine Diskette aufweist und so dimensioniert ist, dass er zwecks Entnahme oder Einsetzen einer Diskette aus dem Behältnis herausschwenkbar ist.

2. Behältnis nach Anspruch 1, dadurch gekennzeichnet, dass die Führungsnut (22) des U-förmigen

- 1 - lts 2/CH

Diskettenhalters an einer Seite durch eine Wand (20) begrenzt ist die höher ist als die Wand (21) auf der gegenüberliegenden Seite.

3. Behältnis nach Anspruch 1, dadurch gekennzeichnet, dass der Deckel (2) eine, in geschlossenem Zustand über eine Seitenwand (4) hinausragende, dem Oeffnen dienende Nase (23) aufweist.

4. Behältnis nach Anspruch 1, dadurch gekennzeichnet, dass an der dem Deckel (2) gegenüberliegenden Schmalseite (5) form- oder kraftschlüssig wirkende Befestigungsmittel (50) angeordnet sind.

5. Behältnis nach Anspruch 1, dadurch gekennzeichnet, dass eine Wand (10) des Behältnisses mit Schwalbenschwanznuten, die gegenüberliegende Wand (11) mit entsprechenden Federn versehen ist.

Es zeigt:

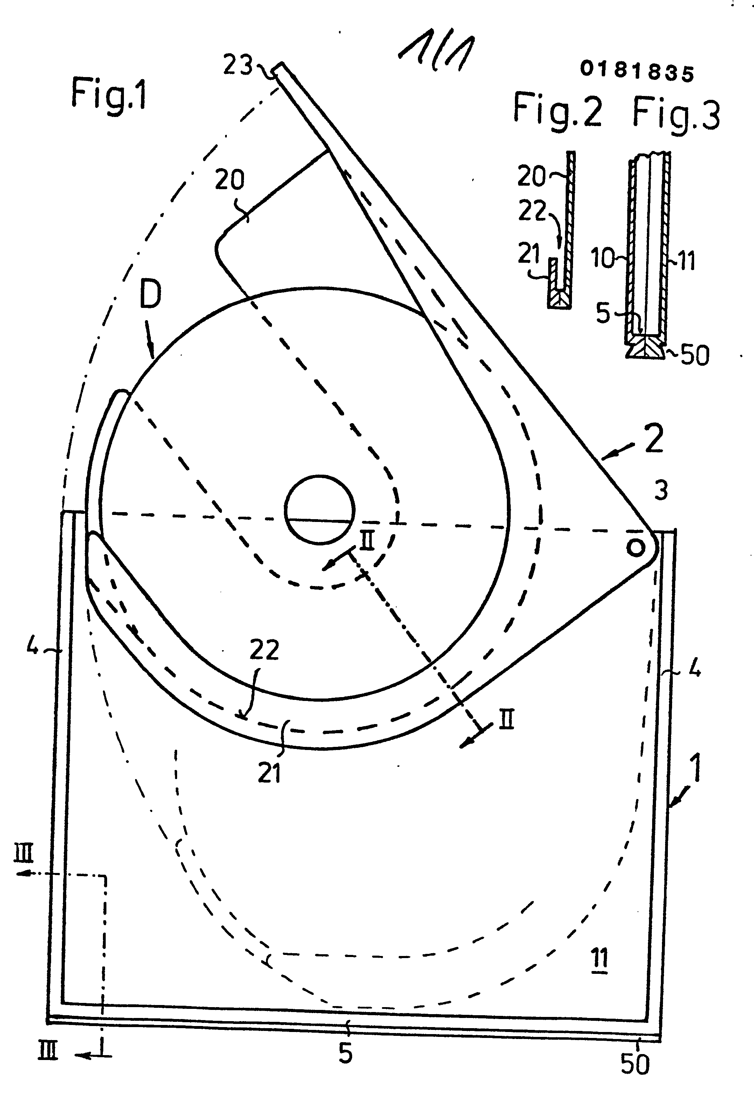

Figur 1 das erfindungsgemässe Behältnis mit aufgeklapptem
Deckel und abgenommer vorderen Halbschale;

Figur 2 einen Schnitt durch den Diskettenhalterteil des
Deckels, im Schnitt längs der Linie II-II

Figur 3 ist ein Teilschnitt durch den Behälter entlang
der Linie III-III in Figur 1.

Das flache rechteckige Aufbewahrungsbehältnis für
Disketten besteht aus zwei Grundeinheiten, dem Behältnis
1 und dem mit einem Diskettenhalter 2 integrierten Deckel
2.

Das Behältnis 1 und Deckel 2 sind durch in einer Ecke
angeordneten Bolzen 3 schwenkbar miteinander verbunden.
Sämtliche Teile des Behältnisses 1 sind aus Kunststoff
hergestellt und bestehen aus Halbschalen, die sich
beispielsweise durch entsprechende Formschlussmittel
einfach zusammendrücken lassen, sodass kein Verkleben
oder Schweissen der deckungsgleichen Teile erforderlich
ist.

Das Behältnis 1 besteht also aus zwei deckungsgleichen Hälften 10,11 die mit verdickten Rändern versehen und miteinander verbunden sind, so dass diese Ränder zwei Seitenwände 4 und Boden 5 bilden.

Im Eckbereich, nahe einer Seitenwand 4 ist ein die beiden deckungsgleichen Hälften des Behältnisses durchsetzender Bolzen 3, beispielsweise in Form eines Hohlnietes vorgesehen, der als Schwenkachse für den, mit dem Diskettenhalter integrierten Deckel 2 dient. Diskettenhalter 2 und Deckel sind ebenfalls aus zwei Hälften 20,21 mit verdickten Rändern zusammengesetzt die eine U-förmige Grundgestalt haben. Der verdickte Rand ist so bemessen, dass eine halbkreisförmige Nut 22 verbleibt, in die eine Diskette D mit Spiel hineinpasst. Die höhere Begrenzungswand 20 der einen Diskettenhalterhälfte erleichtert das Einschieben einer Diskette.

Zum Oeffnen des Deckels mit dem Diskettenhalter ist am Deckel 2 eine Nase 23, vorgesehen die in geschlossenen Zustand ein wenig über die Seitenwand 4 des Behältnisses 1 vorragt.

lts 2/CH

Der Behälter 1 kann an der dem Deckel 4 gegenüberliegenden Bodenfläche 5 eine im Querschnitt schwalbenschwanzförmige Führung 50 aufweisen, die dazu dient das Aufbewahrungsbehältnis in einer entsprechend geformten Halteplatte zu schieben. Auf einer solchen im Auto fest montierten Halteplatte lassen sich dann mehrere erfindungsgemässe Behältnisse dicht nebeneinander anordnen.

Bei der Benützung des beschriebenen Ausführungsbeispieles des Aufbewahrungsbehältnisses für Disketten hebt man mit einem Finger die Nase 23 des Deckels 2. Dieser schwenkt nun um den Bolzen 3 nach oben. In dieser geöffneten Lage kann man mit der gleichen Hand mit der man den Deckel geöffnet hat, nun die Diskette D dem Diskettenhalter 20-22 entnehmen, wobei das Behältnis weiterhin geöffnet bleibt.

Will man nach der Benützung die Diskette D wieder in sein Aufbewahrungsbehältnis 1 zurück tun, so kann man die Diskette mit einer Hand in die der Zentrierung dienende Nut 22 in den Halter rutschen lassen. Die einseitig höhere Begrenzungswand 20 der Nut erleichtert das richtige Einführen der Diskette.

Statt den Boden mit im Querschnitt Schwalbenschwanzförmigen Federn zu versehen, können diese auch an einer
Wand 11 angeordnet sein, wobei dann entsprechende Nuten
in der gegenüberliegenden Wand angebracht sind. Dies hat
den Vorteil, dass die Behältnisse dann direkt miteinander
verbunden werden können ohne, dass dazu eine Halteplatte
erforderlich ist.

F. ...
...in Dipl ...th
...mann Ing HTL
s of AIPPI

1

## Aufbewahrungsbehältnis für Disketten

Die vorliegende Erfindung betrifft ein flaches rechteckiges Aufbewahrungsbehältnis für Disketten, insbesondere für Disketten für Compact-Disc-Abspielgeräte.

Die bisher auf dem Markt erhältlichen, sogenannten CD-Platten sind in flachen Kunststoffschachteln verpackt, die einen Deckel aufweisen der um eine Breitkante scharnierend geöffnet werden kann. Die Verpackung ist für den Gebrauch von Heimanlagen konzipiert.

Es sind jedoch bereits Geräte vorgestellt worden, die im Auto eingebaut werden können. Ein zentrales Problem ist jedoch bei der Verwendung im Auto die einfache, einhändige Bedienung. So wird im Verbandsorgan des TCS

lts 2/CH

2

0181835

(Touring Club der Schweiz) Nr. 36 vom 6.9.1984 Seite 3 darauf hingewiesen: " Einer Lösung harrt auch das Problem der Einführung der Scheibe in das Abspielgerät. Die heute verwendeten Kunststoffkasetten, in der die CD-Scheiben untergebracht sind, können auf keinen Fall einhändig geöffnet werden,; dazu sind immer beide Hände notwendig. Wie soll man beim Fahren vorgehen, vielleicht das Lenkrad mit den Zähnen festhalten?"

Es ist daher die Aufgabe der vorliegenden Erfindung ein Aufbewahrungsbehältnis für Disketten zu schaffen, welches eine einhändige Entnahme und Rückgabe der Diskette aus dem Behältnis, beziehungsweise in das Behältnis ermöglicht.

Diese Aufgabe löst ein Aufbewahrungsbehältnis welches die spezifischen Merkmale des Patentanspruches 1 aufweist.

In der Zeichnung ist ein Ausführungsbeispiel des Erfindungsgegenstandes dargestellt und anhand der nachfolgenden Beschreibung erläutert.

lts 2/CH

Fig.1       Fig.2   Fig.3

0181835